Europäisches Patentamt

European Patent Office

Office européen des brevets

(11) Numéro de publication: **0 022 405**
**B1**

## (12) FASCICULE DE BREVET EUROPEEN

(45) Date de publication du fascicule du brevet: **15.02.84**　　(51) Int. Cl.³: **H 04 N 7/13**

(21) Numéro de dépôt: **80400996.7**

(22) Date de dépôt: **01.07.80**

(54) Dispositif de numérisation des signaux vidéofréquence de télévision et équipement de transmission comportant un tel dispositif.

(30) Priorité: **04.07.79 FR 7917357**

(43) Date de publication de la demande:
**14.01.81 Bulletin 81/2**

(45) Mention de la délivrance du brevet:
**15.02.84 Bulletin 84/7**

(84) Etats contractants désignés:
**BE CH DE GB IT LI LU NL SE**

(56) Documents cités:
**FR - A - 2 320 017
GB - A - 2 003 695
US - A - 3 736 373
US - A - 4 075 655**

**PROCEEDINGS OF THE IEE, vol. 125, no. 9,
septembre 1978, STEVENAGE-HERTS (GB),
DEVEREUX: "Digital video: sub-Nyquist
sampling of Pal colour signals", pages 779 à 786**

(73) Titulaire: **THOMSON-CSF
173, Boulevard Haussmann
F-75379 Paris Cedex 08 (FR)**

(72) Inventeur: **Favreau, Michel
"THOMSON-CSF" - SCPI 173, Bld Haussmann
F-75360 Paris Cedex 08 (FR)**

(74) Mandataire: **Turlèque, Clotilde et al,
THOMSON-CSF SCPI 173, Bld Haussmann
F-75379 Paris Cedex 08 (FR)**

Courier Press, Leamington Spa, England.

## Dispositif de numérisation des signaux vidéofréquence de télévision et équipement de transmission comportant un tel dispositf

La présente invention concerne un dispositif de numérisation de signaux vidéofréquence de télévision, comportant à l'émission un codeur de ces signaux sous forme numérique et, à la réception, un décodeur les restituant sous forme analogique, ainsi qu'un équipement de transmission comportant un tel dispositif.

Certains dispositifs connus utilisent une fréquence d'échantillonnage plus élevée que le double de la fréquence vidéo maximale à transmettre, permettant d'obtenir une bonne définition avec une structure orthogonale des points de l'image, c'est-à-dire que ces derniers sont disposés en colonne les uns au-dessus des autres, de manière d'ailleurs classique. Ils ont l'inconvénient de demander pour le système normalisé à 625 lignes, 5,5 MHz, une fréquence d'échantillonnage voisine de 12 MHz et par conséquent une grande largeur de bande.

D'autres utilisent, pour échantillonner ce même signal, une fréquence d'échantillonnage moins élevée, par exemple 8,875 MHz, voisine du double de la fréquence de la sous porteuse du système PAL donc inférieure au double de la fréquence maximale à transmettre (échantillonnage dit sub Nyquist). C'est le cas par exemple des dispositifs décrits dans le brevet américain US 4 075 655 ou dans l'article de "Proceedings of the IEEE" vol. 125, Sept. 1978, intitulé "Digital Video: Sub Nyquist Sampling of Pal Colour Signals". Ce système ne permet pas, sauf en mettant en oeuvre des moyens de filtrage des composantes non souhaitées dans la bande comprise entre la fréquence porteuse couleur et la fréquence la plus élevée spectre vidéo, de définir une fréquence vidéo supérieure à la fréquence de la sous porteuse couleur 4,4 MHz, soit 4 MHz en pratique, ce qui est insuffisant.

On peut paillier partiellement ce défaut d'une manière plus simple en choisissant un positionnement des éléments d'image (échantillons) en quinconce d'une ligne à la suivante, laissant à l'oeil de l'observateur le soin de faire subjectivement une sorte d'interpolation (par suite de la tendance naturelle à rechercher des alignements de points dans les images).

Si pour des images mouvantes, ce système semble donner satisfaction, sur image fixed, et notamment sur mires, le manque de définition dans le sens horizontal est observable. De plus, la structure en quinconce offre quelques inconvénients lors de la production d'effets spéciaux (truquage électronique, découpages etc.) lorsque aucun traitement supplémentaire n'est effectué.

La présente invention a pour objet de pallier ces derniers inconvénients en complétant cette correction subjective obtenue par le positionnement en quinconce des échantillons par une correction électronique simple tout en maintenant la même fréquence d'échantillonnage transmise et donc la même largeur de bande.

Selon l'invention, un dispositif de numérisation d'un signal vidéofréquence de télévision comprenant: à l'émission, au moins un codeur comportant un premier filtre passe bas fixant la bande du signal vidéofréquence à transmettre, un convertisseur analogique-numérique à échantillonnage dont l'entrée de signal est reliée à la sortie du premier filtre passe-bas, ayant une entrée de commande d'échantillonnage reliée à la sortie d'une horloge, et un circuit de sortie couplé à la sortie du convertisseur délivrant un signal numérique correspondant à une structure d'échantillons en quinconce, au rythme $F_E$; et à la réception, au moins un décodeur comportant: un premier convertisseur numérique-analogique, un second filtre passe-bas dont l'entrée est reliée à la sortie du premier convertisseur numérique-analogique, la sortie du filtre étant couplée à la sortie du décodeur; le dispositif est caractérisé en ce que le premier filtre passe-bas à une fréquence de coupure $F_1$ comprise entre $F_E/2$ et $F_E$, l'horloge d'échantillonnage ayant une fréquence F au moins égale au double de cette fréquence de coupure $F_1$, et en ce que la fréquence de coupure $F_2$ du deuxième filtre passe-bas est légèrement inférieure à $F_E/2$, le décodeur comportant en outre une voie de reconstitution de la partie haute du spectre du signal vidéofréquence comportant un circuit de combinaison des échantillons en quinconce délivrant un signal échantillonné au rythme $2F_E$, un deuxième convertisseur numérique-analogique et un filtre passe-bande dont la bande a une fréquence inférieure égale à $F_2$ et une fréquence supérieure au plus égale à $F_1$, et en ce qu'un mélangeur analogique a ses entrées couplées à la sortie du deuxième filtre passe-bas et du filtre passe-bande et délivre le signal à vidéofréquence à bande élargie reconstitué.

L'invention a également pour objet un équipement de transmission de signaux TV comportant un tel dispositif de numérisation.

L'invention sera mieux comprise et d'autres caractéristiques apparaîtront à l'aide de la description ci-après et des dessins s'y rapportant sur lesquels:
—la figure 1 est en schéma d'un exemple de codeur du dispositif de numérisation selon l'invention;
—la figure 2 est un schéma d'un exemple de décodeur du dispositif de numérisation selon l'invention;
—la figure 3 est un schéma d'une variante de réalisation d'un organe de la figure 2.

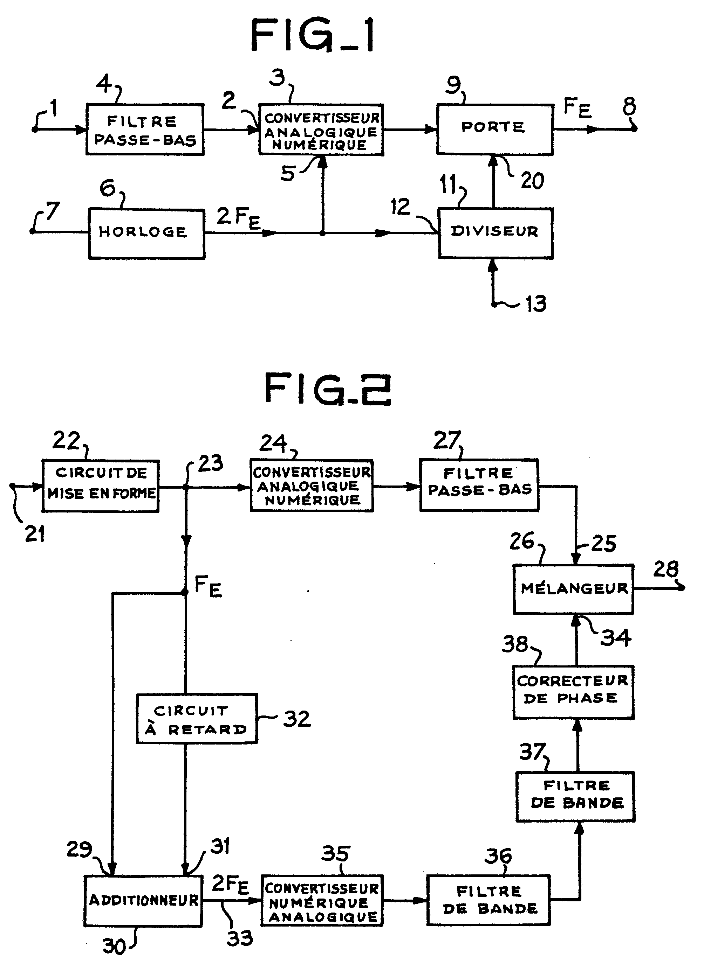

Sur la figure 1, une borne 1 destinée à recevoir la composante de luminance d'un signal de télévision, alimente l'entrée de signal 2 d'un convertisseur analogique-numérique 3 à travers un filtre passe-bas 4; la deuxième entrée 5 du convertisseur 3 est connectée à la sortie d'une horloge 6 ayant une entrée de commande de synchronisation 7. La sortie du convertisseur 3 alimente la sortie 8 du codeur à travers une porte 9 dont la deuxième entrée 10 est connectée à la sortie d'un diviseur par 2, 11, recevant sur une entrée 12 le signal de l'horloge 6 et sur une entrée 13 les signaux de synchronisation.

Un tel codeur se différencie des codeurs connus d'une part par la fréquence de l'horloge 6 qui délivre ici une fréquence d'échantillonnage double de celle utilisée dans le système précédemment cité, c'est-à-dire de 17,75 MHz; corrélativement, la largeur de bande du filtre passe-bas 4 est environ le double de celle habituellement prévue dans ce système c'est-à-dire que le filtre passe-bas a une fréquence de coupure $F_1$ de 8 MHz environ. De plus ce codeur comprend un dispositif d'inhibition des éléments binaires d'un échantillon sur deux, obtenus par la porte logique 9, qui reçoit sur une première entrée le signal de sortie du convertisseur 3 et sur sa seconde entrée 10 un signal de commande qui a une fréquence moitié de la fréquence d'horloge.

Le convertisseur 3 délivre un mot de 8 bits à chaque échantillonnage et c'est donc un mot sur deux qui est transmis sur la sortie 8, c'est-à-dire au rythme 8,875 MHz; cette fréquence étant un multiple impair de la fréquence ligne, les échantillons sont disposés en quinconce.

Par ailleurs l'horloge 6 et le diviseur 11 reçoivent sur leurs entrées respectives 7 et 13 des signaux de synchronisation issus du signal vidéofréquence traité afin de synchroniser leur échantillonnage avec la composante de luminance traitée.

Ces dernières fonctions ne sont pas décrites en détails, car elles sont identiques à celles des codeurs de numérisation classiques.

Le codeur tel que décrit conduit, pour le codage du signal de luminance, au même débit d'information que le codeur pris en référence, le signal étant transmis en mots de 8 bits à la fréquence $F_E = 8,875$ MHz. Ces mots de 8 bits alternent avec des silences de même durée; cette particularité est en fait sans importance, puisque ce débit binaire doit être multiplexé avec celui des autres composantes du signal vidéofréquence couleur, par l'intermédiaire de mémoires tampon: par exemple, deux échantillons du signal de luminance sont multiplexés avec un échantillon de chacun des deux signaux de différence de couleur. Une autre caractéristique de ce débit binaire est beaucoup plus intéressante. Elle résulte du choix de la fréquence d'échantillonnage et de la bande du filtre passe-bas d'entrée, bande de 8 MHz: cette bande correspond à la résolution effective des dispositifs de prises de vues; on sait en effet que la quantité d'informations délivrée par ces dispositifs est répartie dans une bande pouvant atteindre 8 MHz.

Ainsi la qualité des échantillons fournis par le codeur est, en précision et en phase, identique à celle que l'on obtiendrait s'il s'agissait d'un standard à débit correspondant à l'échantillonnage opéré sur le convertisseur 3.

L'intérêt d'un tel codeur sera mieux compris lorsque sera décrit le décodeur correspondant.

Sur la figure 2, une borne d'entrée 21 destinée à recevoir le train de données binaires caractéristique de l'information de luminance est connecté à l'entrée 23 d'un convertisseur numérique-analogique 24 à travers un circuit de mise enmforme 22.

Le convertisseur 24 alimente la première entrée 25 d'un mélangeur analogique 26, à travers un filtre passe-bas 27; la borne d'entrée 23 est en outre connectée à une première entrée 29 d'un additionneur 30 et à sa deuxième entrée 31 à travers un circuit de retard 32.

Enfin la sortie 33 de l'additionneur 30 est connectée à la deuxième entrée 34 du mélangeur 26 à travers un convertisseur numérique-analogique 35, un filtre de bande 36, un filtre de bande 37 et un correcteur de phase 38.

Le présent décodeur comporte deux voies de décodage, l'une comprend le convertisseur 24, qui traite les données reçues ligne par ligne, de manière classique. Il est associé avec le filtre passe-bas 27 ayant une fréquence de coupure $F_2$ de 4 MHz, suffisante pour restituer la totalité des informations qui étaient contenues dans la partie correspondante du spectre du signal de luminance du signal couleur.

L'autre voie imbrique, dans l'additionneur 30, les mêmes données binaires que précédemment avec celles retardées par la ligne à retard 32, de la durée d'une ligne, c'est-à-dire que chaque point d'une ligne est suivi, horizontalement, par son alter ego apparaissant au milieu de l'intervalle qui sépare deux points distincts. On se trouve donc en présence d'un débit binaire doublé, donc au rythme de 17,75 MHz, auquel correspond cette fois une structure de points orthogonaux. Le convertisseur 35 convertit ce débit binaire en signal analogique comme s'il s'agissait d'une succession d'échantillonnages au rythme de 17,75 MHz, mais le filtre 36 ne prélève que la partie du spectre comprise entre 4 et 6 MHz et le filtre 37 élimine toutes les fréquences supérieures à $17,75/2 - \varepsilon$, soit 8 MHz environ, qui pourraient subsister après le premier filtrage passe-bande, avant de réunir ce spectre avec celui de la première voie.

Tout ceci revient en fait à confondre les fréquences élevées et uniquement celles-ci sur deux lignes successives, en conservant une séparation complète des fréquences plus basses. La définition des lignes horizontales (dans le sens vertical) est ainsi complètement conservée (spectre 0—4 MHz) et la définition des mires verticales (dans le sens horizontal) est fournie par un échantillonnage presque surabondant correspondant au double de la fréquence effectivement transmise.

Ce mode de correction se justifie par le fait que les fréquences élevées d'un signal vidéo correspondent pratiquement toujours à des transitions verticales de grande longueur et que, dans ces conditions, il existe une très grande redondance d'information d'une ligne à la suivante. Les transitions obliques sont légèrement défavorisées, mais on peut remarquer qu'une transition oblique à 45° correspond à un spectre de fréquence $1/\sqrt{2}$ fois inférieur à celui de la même transition placée verticalement. Elle est donc parfaitement restituée dans la partie inférieure de la bande vidéo 0—4 MHz.

Il est à noter que la répartition statistique des transitions obliques dans une image est très nettement inférieure à celle des transitions verticales et même des transitions horizontales. A côté d'une meilleure restitution des fréquences élevées du signal vidéo à débit numérique identique, ce circuit permet d'éviter les effets désagréables de la distribution en quinconce seulement, lors de la génération d'effets spéciaux.

Le filtre 37 a pour but d'éliminer des effets parasites pouvant se produire lors de la transmission de lignes horizontales de luminances différentes et uniformes sur deux lignes successives.

Le dispositif a été décrit pour la numérisation d'un signal de luminance, il est également applicable à chacune des composantes de différence de couleur d'un signal couleur TV classique, alternativement échantillonnées, avec toutefois une fréquence d'échantillonnage et des largeurs de bande de filtrage différentes, de la même façon qu'il pourrait être appliqué à un signal de luminance répondant à d'autres critères que ceux du dispositif de numérisation pris en référence.

Le circuit décrit est destiné à l'amélioration d'un système de télévision numérique utilisant un échantillonnage disposé en quinconce d'une ligne à la suivante. Le même dispositif peut être employé pour la disposition en quinconce trame.

Il suffit de donner à la ligne à retard 32 un retard correspondant à la durée d'une trame $\mp\frac{1}{2}$ ligne.

Sur les images fixes ou la partie fixe des images, on augmente la définition horizontale par un facteur important, mais cela nécessite une mémoire de trame.

Il est encore possible d'améliorer les performances en images fixes de ces dispositifs en utilisant une ligne à retard supplémentaire selon la figure suivante montrant une réalisation différente du couplage entre l'entrée 23 du convertisseur 24 et les entrées 29 et 31 de l'additionneur 30.

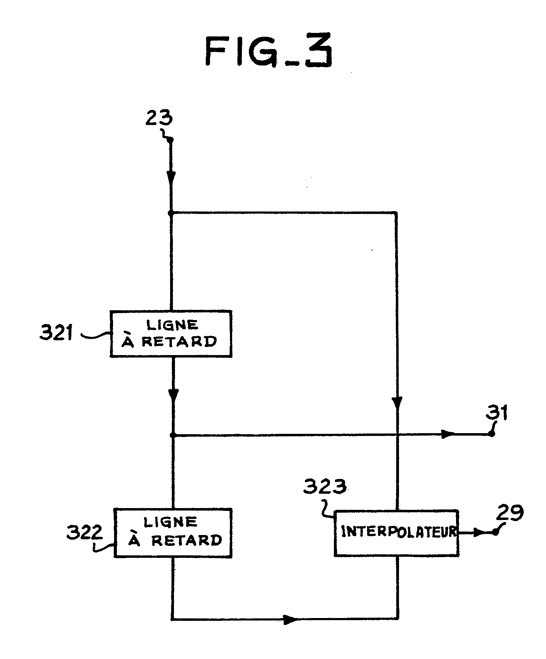

Sur la figure 3 deux lignes à retard 321 et 322 sont montées en série à partir de la borne 23, leur point commun étant connecté à la borne 31. Un dispositif interpolateur 323 a ses deux entrées reliées respectivement à l'entrée de la ligne 321 et à la sortie de la ligne 322, et sa sortie connectée à la borne 29.

Les lignes à retard 321 et 322 ont un retard identique égal exactement à la durée d'une ligne. Le dispositif 323 reçoit sur chacune de ses entrées des points en synchronisme, en provenance respectivement d'une ligne en avance et d'une ligne en retard; il en réalise à chaque instant la valeur moyenne par interpolation, valeur qui est appliquée à l'entrée 29 de l'additionneur 30; le signal correspondant se trouve décalé dans le temps d'un demi intervalle entre deux points par rapport au signal fourni à la borne 31.

Le même schéma est applicable à la structure en quinconce trame en donnant à la ligne 321 un retard d'une trame moins une demi ligne et à la ligne 322 un retard d'une ligne.

## Revendications

1. Dispositif de numérisation d'un signal vidéofréquence de télévision comprenant: à l'émission, au moins un codeur comportant un premier filtre passe-bas (4) fixant la bande du signal vidéofréquence à transmettre, un convertisseur analogique-numérique (3) à échantillonnage dont l'entrée de signal est reliée à la sortie du premier filtre passe-bas, ayant une entrée de commande d'échantillonnage reliée à la sortie d'une horloge (6) et un circuit de sortie (9) couplé à la sortie du convertisseur délivrant un signal numérique correspondant à une structure d'échantillons en quinconce, à la fréquence $F_E$ voisine du double de la fréquence de la sousporteuse couleur; et à la réception, au moins un décodeur comportant: un premier convertisseur numérique-analogique (24), un second filtre passe-bas (27) dont l'entrée est reliée à la sortie du premier convertisseur numérique-analogique, la sortie du filtre étant couplée à sortie du décodeur; le dispositif étant caractérisé en ce que le premier filtre passe-bas (4) du codeur a une fréquence de coupure $F_1$ comprise entre la fréquence la plus élevée de la bande vidéo et $F_E$, l'horloge d'échantillonnage ayant une fréquence $2F_E$ et le circuit de sortie (9) étant une porte logique ayant une entrée de commande destinée à recevoir un signal à la fréquence $F_E$, et en ce que la fréquence de coupure $F_2$ du deuxième filtre passe-bas (27) est légèrement inférieure à $F_E/2$, le décodeur comportant en outre une voie de reconstitution de la partie haute du spectre du signal vidéofréquence comportant en série un circuit de combinaison des échantillons en quinconce (30, 32) délivrant un signal échantillonné au rythme $2F_E$, un deuxième convertisseur numérique-analogique (35) et un filtre passe-bande (36) dont la bande a une fréquence inférieure égale à $F_2$ et une fréquence supérieure au plus égale à $F_1$; et en ce qu'un mélangeur analogique a ses entrées couplées à la sortie du deuxième filtre passe-bas et du filtre passe bande et délivre le signal à vidéofréquence à bande élargie reconstitué.

2. Dispositif selon la revendication 1, caractérisé en ce que, pour une structure d'échantillons en quinconce ligne, les échantillons étant en quinconce d'une ligne à la ligne suivante de la même trame, le circuit de combinaison comporte une ligne à retard (32) reliée à l'entrée du décodeur introduisant un retard égal à la durée d'une ligne et un additionneur (30) dont les entrées sont reliées à l'entrée et à la sortie de la ligne à retard.

3. Dispositif selon la revendication 1, caractérisé en ce que, pour une structure d'échantillons en quinconce trame, les échantillons étant en quinconce d'une ligne à la suivante de la même image, le circuit de combinaison comporte une ligne à retard de durée égale à la durée d'une trame plus ou moins la durée d'une demi-ligne.

4. Dispositif selon la revendication 1, caractérisé en ce que, pour une structure d'échantillons en quinconce ligne, le circuit de recombinaison comporte en série deux lignes à retard introduisant chacune un retard de durée égale à une ligne (321, 322), un circuit interpolateur (323) dont les entrées sont reliées à l'entrée de la première ligne à retard et à la sortie de la seconde, et un additionneur dont une entrée est reliée à la sortie du circuit interpolateur (323) et dont l'autre entrée est reliée au point commun aux deux lignes à retard.

5. Dispositif selon la revendication 1, caractérisé en ce que, pour une structure d'échantillons en quinconce trame, le circuit de recombinaison comporte en série une première ligne à retard (321) introduisant un retard de durée égale à celle d'une trame moins une demi-ligne et une seconde ligne à retard (322) introduisant un retard de durée égale à une ligne, un circuit interpolateur (323) dont les entrées sont reliées à l'entrée de la première ligne à retard et à la sortie de la seconde, et un additionneur dont une entrée est reliée à la sortie du circuit interpolateur (323) et dont l'autre entrée est reliée au point commun aux deux lignes à retard.

6. Dispositif selon l'une quelconque des revendications précédentes, caractérisé en ce que $F_E$ est égale à 8,875 MHz, le codeur et le décodeur traitant la composante de luminance du signal à vidéofréquence de télévision.

7. Equipement de transmission de signaux vidéofréquence de télévision, caractérisé en ce qu'il comporte un dispositif de numérisation selon l'une des revendications précédentes.

## Patentansprüche

1. Vorrichtung zum Digitalisieren eines videofrequenten Fernsehsignals, enthaltend: Sendeseitig wenigstens einen Codierer, der ein erstes Tiefpaßfilter (4), welches das Band des zu übertragenden videofrequenten Signals festlegt, einen Abtast-Analog/Digital-Umsetzer (3), dessen Signaleingang mit dem Ausgang des ersten Tiefpaßfilters verbunden ist und der einen Abtast-Steuereingang aufweist, welcher mit dem Ausgang eines Taktgebers (2) verbunden ist, und eine Ausgangsschaltung (9) umfaßt, die an den Ausgang des Umsetzers angekoppelt ist und ein Digitalsignal abgibt, welches einer gegeneinander versetzten Struktur von Abtastproben entspricht und die Frequenz $F_E$ aufweist, die ungefähr das Zweifache der Frequenz des Farbhilfsträgers beträgt; und empfangsseitig wenigstens einen Decoder, enthaltend: einen ersten Digital/Analog-Umsetzer (24), ein zweites Tiefpaßfilter (27), dessen Eingang mit dem Ausgang des ersten Digital/Analog-Umsetzers verbunden ist, wobei der Ausgang des Filters an den Ausgang des Decoders angekoppelt ist; wobei die Vorrichtung dadurch gekennzeichnet ist, daß das erste Tiefpaßfilter (4) des Codierers eine Grenzfrequenz $F_1$ aufweist, die zwischen der höchsten Frequenz des Videobandes und $F_E$ liegt, wobei der Abtast-Taktgeber eine Frequenz $2F_E$ aufweist, und die Ausgangsschaltung (9) eine logische Torschaltung ist, die einen Steuereingang aufweist, welcher dazu bestimmt ist, ein Signal der Frequenz $F_E$ zu empfangen, und daß die Grenzfrequenz $F_2$ des zweiten Tiefpaßfilters (27) etwas kleiner als $F_E/2$ ist, wobei der Decoder ferner eine Zweig zur Rekonstruktion des oberen Teils des videofrequenten Signals umfaßt, welcher in Serie eine Schaltung zum Kombinieren der gegeneinander versetzten Abtastproben (30, 32), die ein Abtastsignal mit dem Rhythmus $2F_E$ agibt, einen zweiten Digital/Analog-Umsetzer (35) und ein Bandpaßfilter (36) umfaßt, dessen Band eine untere Grenzfrequenz von $F_2$ und eine obere Grenzfrequenz aufweist, die höchstens gleich $F_1$ ist; und daß ein Analogmischer mit seinen Eingängen an den Ausgang des zweiten Tiefpaßfilters und den des Bandpaßfilters angekoppelt ist und das videofrequente Signal mit den rekonstruierten verbreiterten Band abgibt.

2. Vorrichtung nach Anspruch 1, dadurch gekennzeichnet, daß für eine Struktur von gegeneinander versetzten Zeilen-Abtastproben diese Abtastproben von einer Zeile zur darauffolgenden Zeile desselben Teilbildes gegeneinander versetzt sind, wobei de Kombinierschaltung eine Verzögerungsleitung (32) umfaßt, die mit dem Eingang des Decoders verbunden ist und eine Verzögerung einführt, die gleich der Dauer einer Zeile ist, und einen Addierer (30) umfaßt, dessen Eingänge mit dem Eingang bzw. mit dem Ausgang der Verzögerungsleitung verbunden sind.

3. Vorrichtung nach Anspruch 1, dadurch gekennzeichnet, daß für eine Struktur von gegeneinander versetzten Bildsignal-Abtastproben diese Abtastproben von einer Zeile zur nächsten desselben Bildes gegeneinander versetzt sind, wobei die Kombinierschaltung eine Verzögerungsleitung umfaßt, deren Dauer gleich der Dauer eines Teilbildes plus oder weniger der Dauer einer Halbzeile ist.

4. Vorrichtung nach Anspruch 1, dadurch gekennzeichnet, daß für eine Struktur von gegeneinander versetzten Zeilen-Abtastproben die Rekombinierschaltung in Reihe hintereinander zwei Verzögerungsleitungen (321, 322), die jeweils eine Verzögerung von der Dauer einer Zeile einführen, eine Interpolationsschaltung (323), deren Eingänge mit dem Eingang der ersten Verzögerungsleitung bzw. mit dem Ausgang der zweiten Verzögerungsleitung verbunden sind, und einen Addierer umfaßt, dessen einer Eingang mit dem Ausgang der Interpolierschaltung (323) und dessen anderer Eingang mit dem Verbindungspunkt der beiden Verzögerungsleitungen verbunden ist.

5. Vorrichtung nach Anspruch 1, dadurch gekennzeichnet, daß für eine Struktur von gegeneinander versetzten Bildsignal-Abtastproben die Rekombinierschaltung in Reihe hintereinander eine erste Verzögerungsleitung (321), die eine Verzögerung von der Dauer eines Teilbildes minus einer Halbzeile einführt, und eine zweite Verzögerungsleitung (322), die eine Verzögerung von der Dauer einer Zeile einführt, sowie eine Interpolationsschaltung (323), deren Eingänge mit dem ersten Eingang der ersten Verzögerungsleitung bzw. mit dem Ausgang der zweiten verbunden sind, und einen Addierer umfaßt, dessen einer Eingang mit dem Ausgang der Interpolationsschaltung (323) und dessen anderer Eingang mit dem Verbindungspunkt der beiden Verzögerungsleitungen verbunden ist.

6. Vorrichtung nach einem der vorstehenden Ansprüche, dadurch gekennzeichnet, daß $F_E$ gleich 8,875 MHz ist und der Codierer sowie der Decodierer die Luminanzkomponente des videofrequenten Fernsehsignals verarbeiten.

7. Anlage zur Übertragung von videofrequenten Fernsehsignalen, dadurch gekennzeichnet, daß sie eine Digitalisiervorrichtung nach einem der vorstehenden Ansprüche umfaßt.

**Claims**

1. Device for digitizing a video-frequency television signal comprising: on the transmission side, at least one coder comprising a first low pass filter (4) fixing the band of the video-frequency signal to be transmitted, an analog-digital sampling converting (3) whose signal input is connected to the output of the first low pass filter, having a sampling control input connected to the output of a clock (6) and an output circuit (9) coupled to the output of the converter and supplying a digital signal corresponding to a mutually shifted structure of samples, having the frequency $F_E$ approximately twice the frequency of the colour subcarrier; and, on the receiving side, at least one decoder comprising: a first digital-analog converter (24), a second low pass filter (27) whose input is connected to the output of the first digital-analog converter, the output of the filter being coupled to the output of the decoder; the device being characterized in that the first low pass filter (4) of the coder has a cutoff frequency $F_1$ which lies between the highest frequency of the video band and $F_E$, the sampling clock having a frequency $2F_E$ and the output circuit (9) being a logic gate having a control input intended to receive a signal of the frequency $F_E$, and in that the cutoff frequency of the second low pass filter (27) is slightly lower than $F_E/2$, the decoder further comprising a branch for the reconstruction of the upper part of the spectrum of the video-frequency signal comprising in series a circuit for combining the mutually shifted samples (30, 32) furnishing a sampled signal at the rhythm $2F_E$, a second digital-analog converter (35) and a band-pass filter (36) of which the band has a lower frequency equal to $F_2$ and an upper frequency at the most equal to $F_1$; and in that an analog mixer has its inputs coupled to the output of the second low pass filter and of the band-pass filter and furnishes the video-frequency signal with reconstructed widened band.

2. Device according to Claim 1, characterized in that for a structure of mutually shifted line samples said samples are mutually shifted from one line to the following line of the same frame, the combination circuit comprising a delay line (32) connected to the input of the decoder and introducing a delay equal to the duration of a line, and an adder (30) whose inputs are connected to the input and the output of the delay line.

3. Device according to Claim 1, characterized in that for a structure of mutually shifted frame samples, the samples being mutually shifted from one line to the following line of the same picture, the combination circuit comprises a delay line of duration equal to the duration of a frame plus or minus the duration of a half line.

4. Device according to Claim 1, characterized in that for a structure of mutually shifted line samples the recombination circuit comprises in series two delay lines (321, 322) each introducing a delay of duration equal to one line, an interpolation circuit (323) whose inputs are connected to the input of the first delay line and to the output of the second, and an adder whose input is connected to the output of the interpolation circuit (323) and whose other input is connected to the connection point of the two delay lines.

5. Device according to Claim 1, characterized in that for a structure of mutually shifted frame samples, the recombination circuit comprises in series a first delay line (321) introducing a delay of duration equal to that of a frame minus a half line and a second delay line (322) introducing a delay of duration equal to one line, and interpolation circuit (323) whose inputs are connected to the input of the first delay line and to the output of the second, and an adder whose one input is connected to the output of the interpolation circuit (323) and whose other input is connected to the connection point of the two delay lines.

6. Device according to any one of the preceding claims, characterized in that $F_E$ is equal to 8.875 MHz, the coder and the decoder processing the luminance component of the video-frequency television signal.

7. Apparatus for transmitting video-frequency television signals, characterized in that it comprises a digitizing device according to one of the preceding claims.

# FIG_1

# FIG.2

# FIG_3